## Europäisches Patentamt

## European Patent Office

## Office européen des brevets

(19)

(11) Veröffentlichungsnummer: **0 111 656**
**B1**

(12) **EUROPÄISCHE PATENTSCHRIFT**

(45) Veröffentlichungstag der Patentschrift:
15.01.86

(51) Int. Cl.⁴: **B 62 D 21/00**

(21) Anmeldenummer: **83110006.0**

(22) Anmeldetag: **06.10.83**

(54) **Rahmenlängsträger.**

(30) Priorität: **23.11.82 DE 3243221**

(43) Veröffentlichungstag der Anmeldung:
**27.06.84 Patentblatt 84/26**

(45) Bekanntmachung des Hinweises auf die Patenterteilung:
**15.01.86 Patentblatt 86/3**

(84) Benannte Vertragsstaaten:
**AT FR GB IT NL SE**

(56) Entgegenhaltungen:
**DE-C-720 798**

(73) Patentinhaber: **M.A.N. MASCHINENFABRIK AUGSBURG- NÜRNBERG Aktiengesellschaft, Dachauer Strasse 667 Postfach 50 06 20, D-8000 München 50 (DE)**

(72) Erfinder: **Steiner, Manfred, Dr.- Ing., Buchenstrasse 75, D-8044 Unterschleissheim (DE)**

EP 0 111 656 B1

## Beschreibung

Die Erfindung betrifft einen Rahmenlängsträger für Fahrzeugrahmen, gemäß dem Oberbegriff des Patentanspruchs.

Für die Rahmen von Lastkraftwagen, Anhängern hierzu oder ähnlichen Fahrzeugen verwendet man zwei parallel zueinander angeordnete Rahmenlängsträger, die U-förmigen Querschnitt aufweisen und mit ihrem Steg in vertikaler Lage in Längsrichtung des Fahrzeugs angebracht werden.

Insbesondere der Steg, aber auch die Flansche derartiger Rahmenlängsträger sind mit Bohrungen, Durchbrüchen und dergleichen versehen, welche zum Anbringen von sonstigen Rahmen- und Fahrzeugteilen dienen.

Diese Bohrungen werden beispielsweise mittels jeweils eines gesonderten Programmes für den rechten und linken Rahmenlängsträger gestanzt.

Aus Ersparnisgründen versucht man, die Rahmenlängsträger so leicht wie möglich auszubilden. Aus diesem Grund hat man die Rahmenlängsträger als sogenannte "Fischbauchträger" ausgebildet: Bei einem solchen Träger verläuft der obere Flansch in einer horizontalen Ebene, während der untere Flansch nur über den Mittelteil des Trägers hinweg eben und parallel zum oberen Flansch verläuft; zu den beiden Enden des Rahmenlängsträgers hin nimmt kontinuierlich die Breite des Steges ab und der untere Flansch nähert sich dementsprechend kontinuierlich an den oberen an.

Eine Variante dieser Ausführungsform besteht darin, daß man einen Rahmenlängsträger verwendet, bei welchem sich der Steg nur zum einen Ende hin verjüngt, während die Breite des Steges zum anderen Ende hin unverändert bleibt. Diese Ausführungsform hat den Vorteil, daß bei unterschiedlichen Fahrzeugrahmen-Baulängen jeweils ein Rahmenlängsträger-Grundmuster verwendet werden kann, das den Erfordernissen entsprechend an seiner Rückseite abgelängt wird.

Aufgrund der unterschiedlichsten Erfordernisse ist es bisweilen zweckmäßig, den Rahmenlängsträger zu verstärken, indem man beispielsweise dessen Stegbreite erhöht. Dies führt natürlich zu vergrößertem Materialaufwand und somit zu erhöhten Kosten.

Ausgehend von diesem Stand der Technik ist es Aufgabe der Erfindung, den bekannten Rahmenlängsträger, sei er nun an einem oder an beiden Enden verjüngt, auf kostengünstige Weise zu verstärken.

Diese Aufgabe wird erfindungsgemäß durch die Merkmale des Patentanspruchs gelöst.

Der verbreiterte Rahmenlängsträger ist hierbei nicht, wie beim Stand der Technik, längs seiner Längenerstreckung asymmetrisch ausgebildet, sondern bezüglich einer Steg-Mittelachse symmetrisch, und zwar nicht nur in Bezug auf den Verlauf der Stegbreite und den Verlauf der Flansche, sondern auch bezüglich der im Steg und gegebenenfalls auch in den Flanschen vorgesehenen Lochungen.

Die angestrebte Kostenersparnis wird dadurch erreicht, daß für einen Fahrzeugrahmen nicht mehr, wie bisher, zwei unterschiedliche Rahmenlängsträger erforderlich sind, sondern es werden hierzu zwei erfindungsgemäße, in ihrer Ausführung völlig übereinstimmende Längsträger verwendet, welche lediglich gegeneinander spiegelbildlich verdreht sind.

Zwar ist es erforderlich, in jeden der Längsträger mehr Bohrungen beziehungsweise Lochungen einzubringen, als dies bisner der Fall war, aber dies geschieht in zwei gleichen Arbeitsgängen, während früher zum Stanzen der beiden Rahmenlängsträger zwei unterschiedliche Arbeitsgänge notwendig waren.

Um die erfindungsgemäße Kostenverringerung zu erreichen, ist es demnach zunächst notwendig, den Einzelträger durch das Einbringen zusätzlicher Bohrungen dem Grunde nach eigentlich noch zu verteuern.

Die Kostenersparnis bringt aber dann die überraschende Möglichkeit, daß für einen Fahrzeugrahmen nur noch ein einziges Baumuster eines Rahmenlängsträgers erforderlich ist.

Somit werden die zur Herstellung eines verstärkten Rahmenlängsträgers erforderlichen, zusätzlichen Kosten unter Gewinnung weiterer Vorteile völlig aufgefangen, die etwa in verbilligter Lagerhaltung und dergleichen bestehen.

Der Gegenstand der Erfindung ist anhand der beigefügten, schematischen Zeichnung beispielsweise noch näher erläutert; es zeigen:

Fig. 1 eine Seitenansicht eines erfindungsgemäßen Rahmenlängsträgers, von dessen Stegseite her,

Fig. 2 eine Draufsicht auf einen Rahmenlängsträger der Fig. 1 und

Fig. 3 die Draufsicht auf eine andere Ausführungsform eines erfindungsgemäßen Rahmenlängsträgers.

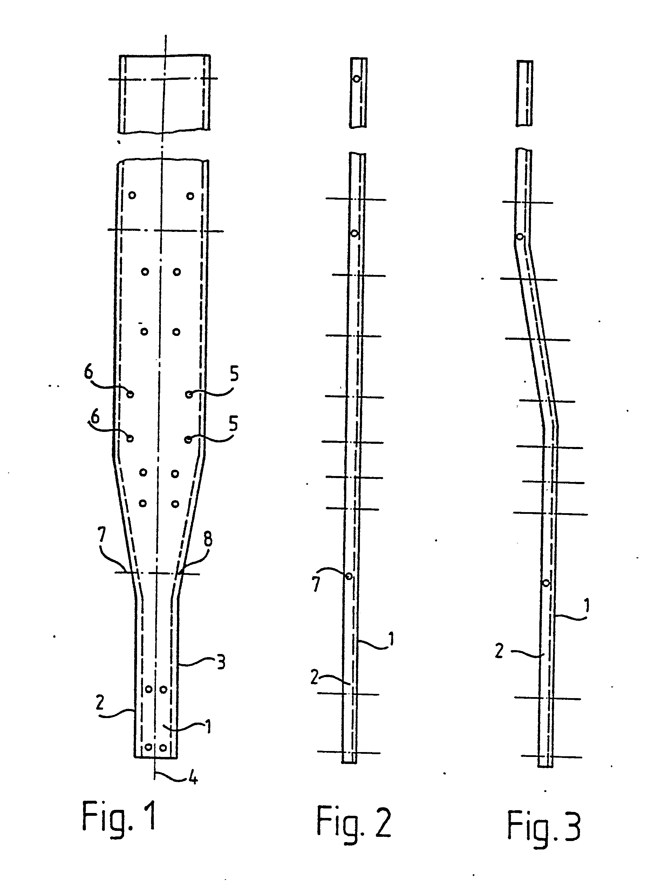

In Fig. 1 ist ein Rahmenlängsträger gezeigt, der aus einem U-Profilträger gebildet ist, welcher einen Steg 1, einen Oberflansch 2 und einen Unterflansch 3 aufweist.

Der Steg 1 weist eine Längsachse 4 auf, zu welcher seine beiden Seitenkanten und somit auch der Ober- und Unterflansch 2, 3 symmetrisch verlaufen.

Bei dem in der Zeichnung gezeigten Ausführungsbeispiel verjüngt sich der Steg 1 nur zum einen Ende des gezeigten Rahmenlängsträgers hin; es ist im Prinzip aber ebenso möglich, auch an dessen anderem Ende eine ähnliche Verjüngung vorzusehen.

Der Steg trägt Bohrungen 5, denen bezüglich der Symmetrieachse gegenüberliegend jeweils gleichartige Bohrungen 6 angeordnet sind.

Auch die Flansche 2, 3 tragen Bohrungen 7 bzw. 8, welche bezüglich einer Mittelebene symmetrisch angeordnet sind, die ihrerseits senkrecht den Steg 1 (und somit die Zeichenebene der Fig. 1) durchdringt und hierbei als Spur die genannte Längs Mittelachse 4 bildet.

Zwei Rahmenlängsträger gemäß der in Fig. 2 gezeigten Ausführungsform sind zur Herstellung eines Sogenannten Parallelrahmens verwendbar, während zwei Rahmenlängsträger der Ausführungsform der Fig. 3 zur Bildung eines sogenannten gespreitzten Rahmens verwendbar ist.

In beiden Fällen werden zum Aufbau eines Fahrzeugrahmens zwei miteinander völlig übereinstimmende Rahmenlängsträger verwendet.

## Patentanspruch

1. Rahmenlängsträger für Fahrzeugrahmen, aus einem U-Profilträger mit einem sich zu wenigstens einem Ende hin verjüngenden Steg, wobei der Steg (1) und gegebenenfalls die beiden Flansche (2, 3) des U-Profilträgers gelocht sind, und wobei der Steg und die Flansche bezüglich einer Längs-Mittelebene symmetrisch angeordnet sind, welche senkrecht den Steg durchdringt und dort als Spur eine Längs-Mittelachse (4) bildet,
dadurch gekennzeichnet, daß der Rahmenlängsträger einteilig ausgebildet ist, und daß die jeweilige Lochung (5, 6, 7, 8) des Steges (1) und der Flansche (2, 3) ebenfalls bezüglich der Längs-Mittelebene (Längs-Mittelachse 4) symmetrisch angeordnet ist.

## Revendication

1°) Longeron de châssis pour châssis de véhicule, constitué d'une poutre profilée en U avec une âme se rétrécissant au moins vers une extrémité, l'âme (1) et le cas échéant les deux ailes (2, 3) de la poutre profilée en U étant percées, l'âme et les ailes étant disposées symétriquement par rapport à un plan médian longitudinal, qui traverse l'âme perpendiculairement et y forme en tant que trace un axe longitudinal (4),
caractérisé en ce que le longeron de châssis est constitué en une seule pièce, et en ce que chaque perforation respective (5, 6, 7, 8) de l'âme (1) et des ailes (2, 3) également pratiquée symétriquement par rapport au plan médian longitudinal (axe longitudinal 4).

## Claim

1. A longitudinal member for motor-vehicle chassis, comprising a U-section member having a web tapering to at least one end, the web (1) and possibly the two flanges (2, 3) of the U-section member being perforated, the web and the flanges being disposed symmetrically with respect to a longitudinal central plane passing perpendicularly through the web where it forms a trace in the form of a longitudinal central axis (4), characterised in that the chassis longitudinal member is of one-piece construction and the perforations (5, 6, 7, 8) in the web (1) and flanges (2, 3) respectively are also symmetrical with respect to the longitudinal central plane (longitudinal central axis 4).

Fig. 1

Fig. 2

Fig. 3